# EUROPEAN PATENT APPLICATION

(11) **EP 0 920 161 A2**
(43) Date of publication of application: **02.06.1999**
(21) Application number: 98122151.8
(22) Date of filing: 25.11.1998
(51) Int. Cl.: H04L 25/03

(54) **Equalisation with zeroing of low correlation values**

(30) Priority: 28.11.1997 JP 341961/97
(71) Applicant: NEC CORPORATION, Tokyo (JP)
(72) Inventor: Maruyama, Hidenori, Minato-ku, Tokyo (JP)
(74) Representative: VOSSIUS & PARTNER

(57) **Abstract**

A method and a circuit of equalization for a receiving signal in radio data communication station of a narrow-band demodulation techniques enable deterioration of error rate to be prevented according to errors such as an amplitude error, a quadrature demodulation error and so forth. A transmission line characteristic is obtained during preamble period, subsequently, the correlation value less than predetermined level is judged as noise to be taken as "0" value, thus setting it to the equalizer 7 by way of the tap coefficient, before causing the correlation value to be obtained within range of optimum tap coefficient for equalization to set to the equalizer 7. It is suitable that the level judged as noise is made variable. Thus it is capable of reducing distortion influencing equalization capability.

## Description

The present invention relates to radio data communication station of narrow-band modulation techniques which implements equalization of a receiving signal while obtaining transmission line characteristic during preamble period. More to particularly this invention relates to method and circuit of equalization for receiving signal for implementing equalization and demodulation of the receiving signal while obtaining an optimum tap coefficient to set to the equalizer for implementing equalization with the equalizer.

Formerly, in a radio data communication station which implements equalization of a receiving signal while obtaining transmission line characteristic during preamble period, which adopts narrow-band modulation techniques such as GMSK (Gaussian-filtered minimum shift keying) modulation techniques and so forth, the radio data communication station causes a correlator to obtain a correlation value to be stored in a correlation value storing section during preamble period. The radio data communication station obtains an impulse response amplitude value of the transmission line from the obtained correlation value. The radio data communication station determines range of an optimum tap coefficient for equalization from the obtained amplitude value. The radio data communication station sets the correlation value within the range of the optimum tap coefficient to the equalizer by way of determined tap coefficient from the correlation value storing section. The radio data communication station starts demodulation based on the set tap coefficient.

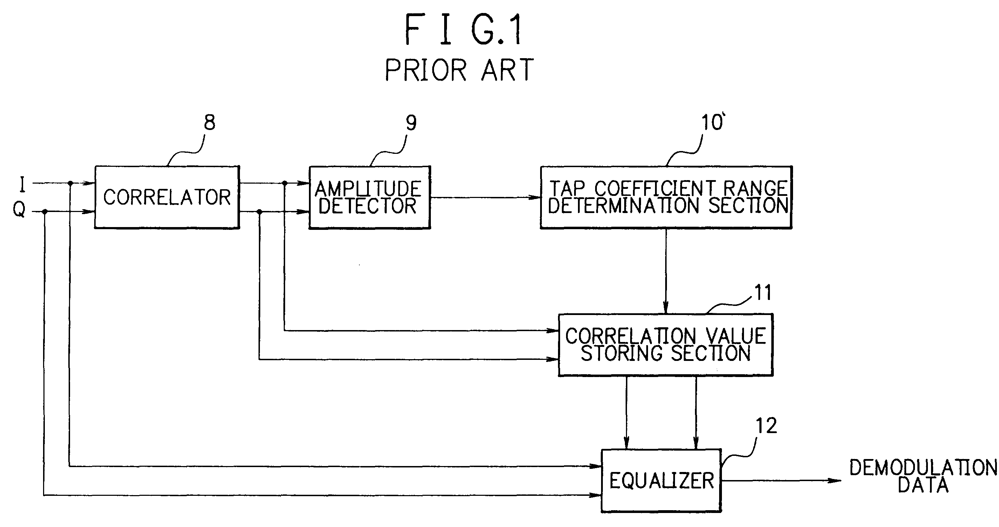

Fig. 1 is a block diagram showing constitution example of the prior art. The conventional radio data communication station comprises a correlator 8 for obtaining an impulse response of a transmission line from receiving signals I, Q undergoing quadrature demodulation by radio section and so forth which are not illustrated, an amplitude detector 9 for obtaining an amplitude value (for instance, square root of (I² + Q²)) from each impulse response of the receiving signals I, Q which are obtained by the correlator 8, a tap coefficient range determination section 10 for determining the range of the tap coefficient which is necessary for equalization from the obtained amplitude value by the amplitude detector 9, a correlation value storing section 11 for storing respective correlation values obtained from the receiving signals I, Q through the correlator 8, and an equalizer 12 for implementing demodulation while setting the tap coefficient value within the range determined by the tap coefficient range determination section 10 to implement equalization.

In the conventional radio data communication station of narrow-band demodulation techniques which obtains the transmission line characteristic during the preamble period to implement equalization of the receiving signal, the radio data communication station only obtains the correlation value of the receiving signal by the correlator during the preamble period, before determining the tap coefficient of the optimum range by the amplitude value obtained from the correlation value, thus setting it to the equalizer. In such a system, when there occurs errors such as amplitude error, quadrature demodulation error and so forth in the radio section and so forth, in some cases, distortion occurs in the tap coefficient detected. In particular, the more equalization range is enlarged, the more influence becomes large because error is accumulated. There is the danger that this becomes large main cause which deteriorates error rate.

In view of the foregoing, it is an object of the present invention for resolving the above-mentioned problems to provide an equalization method which is capable of maintaining optimum equalization performance or equalization capability even though there occurs error such as amplitude error, quadrature demodulation error or the like in the radio section and so forth.

It is another object of the present invention to provide an equalization circuit which enables distortion which influences the equalization performance and equalization capability to be reduced on the ground that it causes the optimum tap coefficient without noise to be obtained to set to the equalizer in the narrow band demodulation techniques implementing equalization of the receiving signal while obtaining transmission line characteristic within the preamble period.

In accordance with one aspect of the present invention, for achieving the above-mentioned object, there is provided an equalization method in which a transmission line characteristic is obtained during preamble period, subsequently, the correlation value less than predetermined level is judged as noise to be taken as "0" value, thus setting it to the equalizer by way of the tap coefficient, before causing the correlation value to be obtained within range of optimum tap coefficient for equalization to set to the equalizer.

In accordance with another aspect of the present invention, there is provided an equalization circuit which is an equalization circuit of a narrow-band demodulation system for implementing equalization of a receiving signal while obtaining transmission line characteristic during preamble period, the equalization device is provided with an equalizer for equalizing the receiving signal, a tap coefficient establishing section for obtaining correlation value within range of optimum tap coefficient in terms of the equalizer during the preamble period, and a distortion removal control section for making the correlation value less than prescribed level of correlation value output of the tap coefficient establishing section zero to set to the equalizer by way of the tap coefficient. More concretely, in radio data communication station and so forth of system implementing equalization of the receiving signal obtaining the transmission line characteristic during preamble period using narrow-band demodulation techniques of the GMSK (Gaussian-filtered minimum shift keying) demodulation techniques and so forth, there is provided a means for calculating correlation value between said receiving signal and a known preamble signal, a means for obtaining an amplitude value of an impulse response from the correlation value obtained due to the correlation calculation, a means for obtaining a range of an optimum tap coefficient for an equalizer from the amplitude value, a means for maintaining the correlation value, a means for outputting the correlation value within the range of the optimum tap coefficient for the equalizer, a means for making signal less than predetermined level of outputted correlation values "0" (zero), and a means for setting these correlation values to the equalizer.

As stated above, the method and the device of equalization for the receiving signal according to the above aspects of the present invention, the correlation value less than predetermined level is judged as noise to be taken as "0" value, thus setting it to the equalizer by way of the tap coefficient, before causing the correlation value to be obtained within range of optimum tap coefficient for equalization to set to the equalizer, thus removing noise of the tap coefficient for the equalizer so that it causes the distortion to be reduced, such distortion influencing equalization performance or equalization capability.

The above and further objects and novel features of the invention will be more fully understood from the following detailed description when the same is read in connection with the accompanying drawings. It should be expressly understood, however, that the drawings are for purpose of illustration only and are not intended as a definition of the limits of the invention. In the drawings:
Fig. 1 is a block diagram showing a configuration of the conventional example;
Fig. 2 is a block diagram showing an embodiment of the present invention;
Fig. 3 is a view showing a transmission data format of the burst system by way of the receiving signal; and
Figs. 4A and 4B are views showing examples of impulse response of a transmission line obtained through a symbol space.

A preferred embodiment of the present invention will be described in detail referring to accompanying drawings.

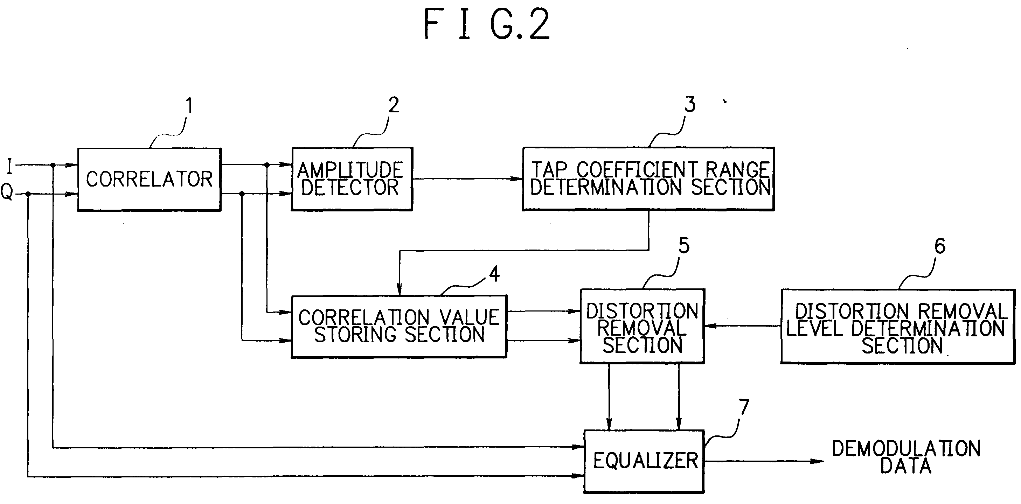

Fig. 2 is a view showing one embodiment of either equalization method or equalizing circuit which enable noise elimination of a tap coefficient for the equalizer according to the present invention.

The present embodiment is an equalizer device in the radio data communication station and so forth which comprise an equalizer 7 in relation to the receiving signal, a correlator 1 for supplying optimum tap coefficient to the equalizer 7, an amplitude detector 2, a tap coefficient range determination section 3 and a correlation value storing section 4. The equalizer device is provided with a distortion removal section for removing noise of the tap coefficient for equalizer in relation to output of the correlation value storing section 4 which gives optimum tap coefficient and a distortion removal level determination section 6 determining removal level in the distortion removal section 5.

Next, function of respective sections or operation of the present embodiment will be described.

The correlator 1 obtains an impulse response of a transmission line while obtaining correlation between receiving signals I, Q undergoing quadrature demodulation by radio section and so forth and an already-known preamble signal. The amplitude detection section 2 obtains amplitude value from the respective impulse responses of the receiving signals I, Q obtained by the correlator 1. The tap coefficient range determination section 3 determines range of the tap coefficient which is necessary for the equalization from the amplitude value obtained by the amplitude detection section 2. The correlation value storing section 4 stores therein the correlation value obtained from the receiving signals I, Q obtained by the correlator 1. The distortion removal section 5 judges value less than predetermined level from the correlation value within the range determined by the tap coefficient range determination section 3 by way of noise to be removed. The distortion level determination section 6 determines level of the correlation value which is removed by way of noise in the distortion removal section 5. The equalizer 7 in which the correlation value removed as noise in the distortion removal section 5 is set by way of the tap coefficient, implements equalization of the receiving signals I, Q on account of the tap coefficient to implement demodulation.

Next, noise removal operation of the present embodiment in relation to the transmission data will be described.

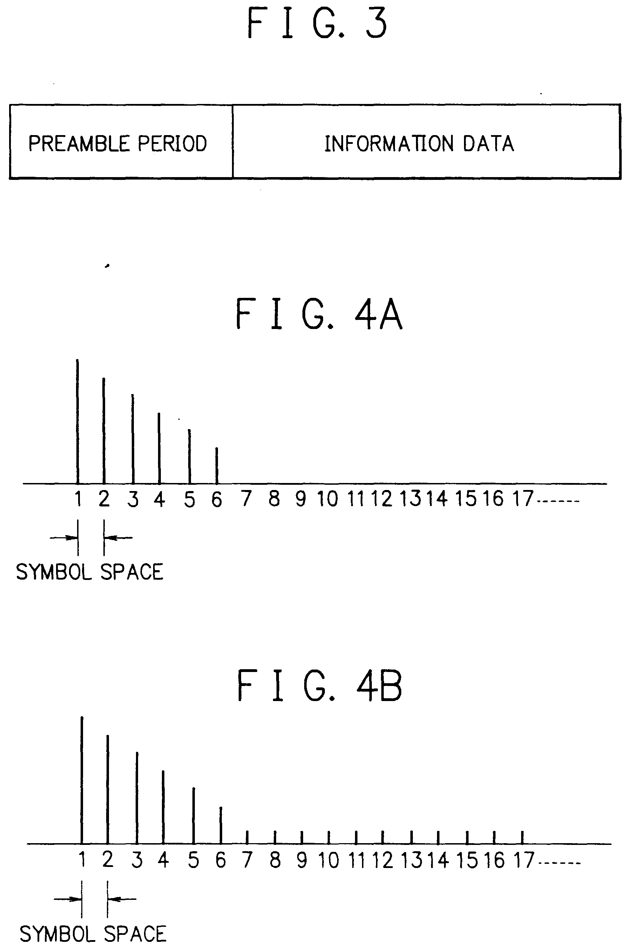

Fig. 3 is a view showing an example of the format of the transmission data in the preferred radio communication method to which the present invention is applied. The transmission data in the present embodiment has a burst state data format consisting of a preamble period, an information data period, and so forth on the heels thereof as shown in Fig. 3.

In the present embodiment, during the preamble period of the transmission data, there is obtained range and correlation value of the optimum tap coefficient, before implementing processing that the obtained correlation value is set to the equalizer 7 to start equalization.

Figs. 4A and 4B are views showing example of the impulse response of the transmission line obtained through a symbol space. Fig. 4A shows example of the normal impulse response, and Fig. 4B shows example of the impulse response with distortion generated caused by amplitude error, quadrature demodulation error and so forth in the radio section and so forth.

The tap coefficient range determination section 3 in the present embodiment selects range of the large amplitude value of the impulse response by way of appropriate equalization range of the equalizer 7 in terms of the impulse response such as Fig. 4A, and 4B. When the tap coefficient range determination section 3 determines for instance, quantity for 15 taps by way of equalization range, the correlation value of the impulse response for 15 taps is stored in the correlation value storing section 4.

Next, there is inputted the correlation value for 15 taps outputted from the correlation value storing section 4 to the distortion removal section 5, subsequently, in the distortion removal section 5, judging the correlation value less than prescribed level of the inputted correlation values by way of noise to be replaced to value of "0". This prescribed level is capable of constituting so as to be established from the distortion removal level determination section 6. The distortion removal level determination section 6 enables judgement threshold value to be controlled, while judging whether or not it is the noise level to be controlled.

As a result, there is removed the correlation value with low level accompanying with distortion and so forth, even though there occurs the impulse response with distortion generated by errors such as amplitude error, quadrature demodulation error and so forth in the radio section and so forth, as shown in Fig. 4B.

Thus, there is set only the correlation value more than the level established by way of noise level of the tap coefficient within the optimum range obtained by the tap coefficient range determination section 3 to the equalizer 9 by way of the tap coefficient, when there is received the information data of the receiving signal, thus being implemented the equalization of the receiving signals I, Q based on the tap coefficient.

In the above-described embodiment, there is described using the example which enables judgement of the noise level to be variable according to the distortion removal level determination section 6. However, it is capable of constituting so as to establish fixed noise level in the distortion removal section 5. Further, in the distortion removal level determination section, it is capable of constituting so as to automatically control the noise level of the distortion removal section based on either the correlation value level or the amplitude level, while inputting either the correlation value with the exception of range of the optimum tap coefficient obtained by the tap coefficient range determination section or the corresponding amplitude value of the impulse response. Furthermore, the determination in the distortion removal level determination section relies on soft wear, However, it is capable of constituting so as to implement by hard wear such as in-line package switch and so forth.

As described above, according to the present invention, there is obtained the transmission line characteristic during the preamble period by narrow-band demodulation techniques, in the radio data communication station and so forth which are communication systems implementing equalization of the receiving signal, judging signal less than prescribed level as noise in the correlation value to remove it, thereby, it is capable of improving equalization characteristic and equalization capability because of enabling the distortion influencing the equalization to be reduced, even though when distortion occurs in the detected correlation value caused by errors such as amplitude error, quadrature demodulation error and so forth in the radio section and so forth.

While preferred embodiments of the invention have been described using specific terms, such description is for illustrative purpose only, and it is to be understood that changes and variations may be made without departing from the spirit or scope of the following claims.

## Claims

1. An equalization method of a receiving signal of a narrow-band demodulation techniques of implementing equalization of following receiving signal, while obtaining a transmission line characteristic during a preamble period comprising the steps of:
obtaining an amplitude value of an impulse response from a correlation value calculated from said receiving signal during said preamble period and a known preamble signal;
obtaining range of optimum tap coefficient of an equalizer (7) based on said amplitude value;
setting correlation value less than prescribed level of correlation values within range of said tap coefficient to be zero to be taken as a tap coefficient of an equalizer (7); and
implementing equalization of following information data.

2. An equalization circuit of narrow-band demodulation techniques for implementing equalization of a receiving signal while obtaining transmission line characteristic during preamble period comprising:
an equalizer (7) for equalizing said receiving signal;
a tap coefficient establishing section for obtaining correlation value within range of optimum tap coefficient in terms of said equalizer (7) during said preamble period; and
a distortion removal control section for making the correlation value less than prescribed level of correlation value output of said tap coefficient establishing section zero to set to said equalizer (7) by way of the tap coefficient.

3. An equalization circuit as claimed in claim 2, wherein said tap coefficient establishing section comprises a correlator 1 for calculating correlation value between said receiving signal and a known preamble signal, a tap coefficient range determination section (3) for determining range of the tap coefficient based on amplitude value of the impulse response obtained from said correlation value, and a correlation value storing section (4) for storing correlation value within range of said tap coefficient.

4. An equalization circuit as claimed in claim 2, wherein said distortion removal control section comprises a distortion removal section (5) which makes correlation value less than prescribed level of said correlation value output zero to set to equalizer (7), and a distortion removal level determination section (6) for determining said level.

5. An equalization circuit as claimed in claim 3, wherein said distortion removal control section comprises a distortion removal section (5) which makes correlation value less than prescribed level of said correlation value output zero to set to equalizer (7), and a distortion removal level determination section (6) for determining said level.

6. An equalization circuit as claimed in claim 2, which is applied to a GMSK (Gaussian-filtered minimum shift keying) demodulation techniques.

7. An equalization circuit as claimed in claim 3, which is applied to a GMSK (Gaussian-filtered minimum shift keying) demodulation techniques.

8. An equalization circuit as claimed in claim 4, which is applied to a GMSK (Gaussian-filtered minimum shift keying) demodulation techniques.
